(19) Europäisches Patentamt
European Patent Office
Office européen des brevets

(11) Publication number: **0 147 667**
**B1**

(12) **EUROPEAN PATENT SPECIFICATION**

(45) Date of publication of patent specification: **08.06.88**

(51) Int. Cl.⁴: **C 09 D 11/00,** C 09 D 11/16

(21) Application number: **84114595.6**

(22) Date of filing: **30.11.84**

(54) **Reaction product and its use as additive conferring water resistance on ink compositions and colouring compositions and on paper.**

(30) Priority: **01.12.83 JP 227582/83**

(43) Date of publication of application:
**10.07.85 Bulletin 85/28**

(45) Publication of the grant of the patent:
**08.06.88 Bulletin 88/23**

(84) Designated Contracting States:
**CH DE GB LI**

(56) References cited:
**US-A-3 332 912**
**US-A-4 155 768**

**IBM TECHNICAL DISCLOSURE BULLETIN, vol. 24, no. 8, January 1982, pages 4321-4322, New York, US; P.E. FLUTY et al.: "Two-penetrant jet ink"**

(73) Proprietor: **ORIENT CHEMICAL INDUSTRIES, LTD.**
**7-14, 1-chome, Shinmori Asahi-ku**
**Osaka-shi (JP)**

(72) Inventor: **Akiyama, Kazutoshi**
**2-10-22, Matsugaoka**
**Matsubara-shi Osaka-fu (JP)**
Inventor: **Ono, Takashi**
**A-15-201, 12, Shinmachi Hashiramoto**
**Takatsuki-shi Osaka-fu (JP)**

(74) Representative: **Vossius & Partner**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 147 667 B1

**Description**

The present invention relates to a reaction product and its use as an additive conferring water resistance on ink compositions and colouring compositions and on paper.

Aqueous inks contain various kinds of water soluble dyes. These aqueous inks have excellent solution stability, but have bad water-resistance as a written trace or a printed image.

Many water-resistant additives which mean additives for rendering an ink composition water-resistant have been proposed in order to overcome the above problem, for example, an additive comprising epoxypropyltrialkylammonium halogenide and 2-aminoethyl sulfate (Japanese Patent Publication (unexamined) No. 115306/1978); an additive comprising a cationic surfactant (a salt forming dye) (Japanese Patent Publication (unexamined) No. 116762/1981); an additive comprising 1,3-dimethylimidazolidone (Japanese Patent Publication (unexamined) No. 10658/1982); a cationic water-soluble resin Japanese Patent Publication (unexamined) No. 198768/1982); an additive comprising polyoxyethylene-2-pyrrolidone-5-amide 202359/1982); an additive comprising polyethylene glycol monomethyl ether (n=4 to 7) and pyrrolidone (Japanese Patent Publication (unexamined) No. 183763/1983); a resinous additive (Japanese Patent Publication (unexamined) Nos. 176/1983 and 7466/1983) and the like.

However, inks containing these additives are not expected to have excellent water-resistance right after writing down. These inks do not have stability to pH so that they have to be kept in a limited pH range. The inks which have a better water-resistance have worse storage stability.

The present invention provides a reaction product obtainable by

(a) a vinyl compound soluble in water or in a water soluble organic solvent, with

(b) an active hydrogen-containing compound which contains at least two groups having an active hydrogen respectively, at least one group of which is an amino group or imino group, or an active hydrogen-containing compound which contains a halogen atom and an amino or imino group,

(c) optionally in the presence of a catalyst and

(d) optionally in the presence of a solvent.

The reaction product of the present invention confers excellent properties as to water-resistance and solution stability on ink compositions and colouring composition. It also confers water resistance on paper coated with the reaction product.

Examples of useful vinyl compounds soluble in water or in a water soluble organic solvent are acrylic acid, 2-hydroxyethyl acrylate, acrylamide, 2-acrylamide-2-methylpropanesulfonic acid, methacrylic acid, 2-hydroxyethyl methacrylate, diethylaminoethyl methacrylate, 2-methoxypolyetylene glycol methacrylate, 2-methacryloyloxyethyl acid phosphate, allylsulfonic acid, styrenesulfonic acid, N-vinylpyrrole, N-vinylpyrrolidone, N-vinylsuccinimide, 5-vinylpyrazoline, N-vinylmonoethyleneurea, N-vinyloxazolidone, 2-vinylthiazole, 2-vinylpyridine, 4-vinylpyridine, 1-methyl-2-vinylpiperidine, 4-vinylpiperidine, N-vinylpiperidone, 2vinylpyrazine, N-vinylcaprolactum and mixtures thereof. Preferred exmples are 2-hydroxyethyl acrylate, 2-hydroxyethyl methacrylate, 2-methoxypolyetylene glycol methacrylate, N-vinylpyrrole, N-vinylpyrrolidone, N-vinylsuccinimide, N-vinylmonoethyleneurea, N-vinyloxazolidone, 1-methyl-2-vinylpiperidine, N-vinylpiperidone, and N-vinylcaprolactum.

Preferably, the amount of the vinyl compound is from 30 to 60 percent by weight in the reaction mixture. Amounts less than 30 percent by weight are undesirable because the reaction product will confer insufficient water-resistance on ink compositions. Amounts more than 60 percent by weight are undesirable, because a large amount of the water soluble organic solvent is required for preparing a solution.

The active hydrogen-containing compound used in the present invention contains at least two groups (or atoms) which contain an active hydrogen, at lease one group of which is an amino or imino group. In this context, "imino group" includes a cyclic secondary amine. Examples of these compounds are m-aminophenol, p-aminophenol, 2-aminophenol-4-sulfonamide, m-phenylenediamine, p-phenylenediamine, 2-chloro-m-phenylenediamine, 2,5-dichloro-m-phenylenediamine, tolylene-2,4-diamine, m-xylylenediamine, m-phenylenediamine-4-sulfonic acid, o-tolidine, 2-phenyl-4,5-dihydroxymethylimidazol, 5,5-dimethylhydantoin, melamine, melamine resins, guanidine, diphenylguanidine, benzoguanamine, urea, thiourea and mixtures thereof. Besides the above compounds, the other active hydrogen-containing compound which contains a halogen atom and an imino or imino group, such as o-, m-, or p-chloroaniline can be also employed. Preferred examples are m-aminophenol, m-phenylenediamine, p-phenylenediamine, 2-chloro-m-phenylenediamine, m-phenylenediamine-4-sulfonic acid, 5,5-dimethyl-hydantoine, diphenyl-guanidine, benzoguanamine, urea, thiourea, o-, m-, or p-chloroaniline. The amount of the active hydrogen-containing compound is preferably from 2 to 10 percent by weight in the reaction mixture. Amounts less than 2 percent by weight are undesirable because of insufficient solution stability and insufficient water-resistance of the final composition. Amounts larger than 10 percent by weight are undesirable because the final product has poor quality.

The molar ratio of the vinyl compound to the active hydrogen-containing compound is 100:5 to 30, preferably 100:5 to 30.

The reaction of the vinyl compound with the active hydrogen-containing compound can be conducted either without a solvent or in the presence of a solvent. Especially preferred solvents are those that can

dissolve the components (a) and (b) to form a mixture having a low viscosity. More preferred solvents are those which control the hygroscopicity and the evaporation of ink composition. Examples of the solvents are lower alcohols having 1 to 6 carbon atoms; glycols, such as ethylene glycol, diethylene glycol and triethyleneglycol; glycol ethers, such as ethylene glycol monoethyl ether, ethylene glycol mono-n-butylether, diethylene glycol monomethyl ether and the like; glycol monoacetate; glycerol; glycolic acid; ethylene carbonate; butyrolactone; 2-pyrrolidone; N-methylpyrrolidone; dimethyl formamide; tetrahydrofuran; dioxane; dimethylsulfoxide; and a mixture thereof. The amount of the organic solvent is generally lower than 60 percent by weight in the reaction mixture.

For obtaining the reaction product of the invention, the reaction of the vinyl compound with the active hydrogen-containing compound may be conducted in the presence of a catalyst. Preferred examples of the catalysts are acid catalysts, such as hydrogen chloride, sulfuric acid, phosphoric acid, benzenesulfonic acid, p-toluenesulfonic acid, a free acid of the above vinyl compounds, an acid salt of the active hydrogen containing compound, a polymerization initiator, such as 2,2'-azobisisobutyronitrile, or a peroxide, such as benzoyl peroxide or butyl peroxide and the like. A preferred catalyst is an acid catalyst. The amount of the catalyst is smaller than 5 percent by weight in the reaction mixture.

The reaction is conducted at a temperature of 10 to 160°C, preferably 60 to 110°C for 0.5 to 10 hours.

In the reaction, various types of reaction pathways seem to be involved so as to lead to the surprising effect of water resistance and stability in the final reaction product. At least two possibilities arise in the course of the reaction:

a) the vinyl compound and the active hydrogen-containing compound react in a molar ratio of 1:1 or 2:1. For example 2-hydroxyethyl methacrylate

$$(CH_2{=}\overset{\overset{\large CH_3}{|}}{C}{-}COOCH_2CH_2OH)$$

and p-chloroaniline ($ClC_6H_4NH_2$) will yield the following reaction products (Michael-adducts):

$$ClC_6H_4NH{-}CH_2{-}\overset{\overset{\large CH_3}{|}}{CH}{-}COOCH_2CH_2OH \quad (1:1 \text{ reaction})$$

$$ClC_6H_4N\begin{cases} CH_2{-}\overset{\overset{\large CH_3}{|}}{CH}{-}COOCH_2CH_2OH \\ CH_2{-}\underset{\underset{\large CH_3}{|}}{CH}{-}COOCH_2CH_2OH \end{cases} \quad (1:2 \text{ reaction})$$

b) a polymer of the vinyl compound reacts with the active hydrogen-containing compound.

The Michael-adducts can be identified by their infrared spectrum after purification by liquid chromatography.

The reaction product of the present invention is optionally dissolved in water and/or a water/soluble organic solvent to obtain the additive solution.

In case that the obtained additive solution is acidic, the pH can be adjusted with ammonia, sodium hydroxide, potassium hydroxide, lithium hydroxide, or an alkanolamine.

The reaction product of the present invention can be added either to a colouring composition or to an ink composition. The amount to be added depends on the final use. The amount may be varied substantially and can be, for example, of from 2 to 80 percent by weight in the coloring composition.

The coloring composition containing the additive of the present invention has excellent stability for a long time and extends the stability over a broad pH range.

When the additive is added to an ink composition, 2 to 30 parts by weight of a coloring agent and 15 to 30 parts by weight of the additive of the present invention are admixed with the solvent to form 100 parts by weight of a mixture. The resultant mixture is optionally filtrated to obtain the ink composition.

The ink composition can also be prepared from the coloring composition containing the reaction product. For example, distilled water is mixed with 15 to 60 parts of the coloring composition and 15 to 30 parts of a water-soluble organic solvent to obtain 100 parts of a mixture. The resultant mixture is optionally filtered to obtain the ink composition.

The ink composition may be formulated with other conventional additives, such as a surfactant, an anti-corrosive agent or a fungicide.

The ink composition prevents effectively corrosion and plugging of a capillary passageway and has excellent water-resistance as a written trace or a printed image.

The reaction product of the present invention can be used also as a coating composition for paper to provide water-resistance, after applying an ink composition or coloring composition.

The present invention is illustrated by the following examples, which, however, are not to be construed as limiting the present invention. In the examples, all parts and percentages are by weight unless otherwise specified.

EXAMPLE

Example 1

A additive solution was prepared from the following ingredients:

| Ingredients | Parts by weight |
|---|---|
| 4-Vinylpyridine | 68 |
| Tolylene-2,4-diamine | 10 |
| 2-Pyrrolidone | 64 |

The above ingredients were charged in a four-necked 300ml flask equipped with a stirrer, a thermometer and a condenser and mixed for 1 hour at room temperature. One part of hydrogen chloride is added to the resultant mixture which was heated gradually and which then was held at 90 to 100°C for one hour. The mixture was, furthermore, held at 60°C for 2 hours.

100 parts of warm water were added to the resultant reaction solution and the resultant mixture was adjusted to a pH of about 7. Water was added to the solution to obtain 250 parts of the additive solution.

Example 2

A additive solution was prepared from the following ingredients:

| Ingredients | Parts by weight |
|---|---|
| 4-Vinylpyrrole | 70 |
| Benzoguanamine | 10 |
| N-Methylpyrrolidone | 64 |
| p-Toluenesulfonic acid | 2 |

The above ingredients were reacted and treated as described generally in Example 1 to obtain 250 parts the additive (solution).

Example 3

A additive solution was prepared from the following ingredients:

| Ingredients | Parts by weight |
|---|---|
| 2-Hydroxyethyl methacrylate | 85 |
| p-Chloroaniline | 10 |
| Ethylene glycol | 50 |
| Sulfuric acid | 1 |

The above reactants were reacted and treated as described generally in Example 1 to obtain 250 parts the additive (solution.)

Example 4

A additive solution was prepared from the following ingredients:

| Ingredients | Parts by weight |
|---|---|
| N-vinylpyrrolidone | 72 |
| p-Aminophenol | 10 |
| Phosphoric acid | 1 |

The above ingredients were reacted and treated as described generally in Example 1 to obtain 250 parts the additive (solution).

Example 5

A additive solution was prepared from the following ingredients:

| Ingredients | Parts by weight |
|---|---|
| N-Vinylmonoethyleneurea | 73 |
| p-Phenylenediamine | 10 |
| Diethylene glycol | 50 |
| Azobisisobutyronitrile | 3 |

The above ingredients were reacted at a temperature of 60 to 70°C for 10 hours and treated as described generally in Example 1 to obtain 250 parts the additive (solution).

Example 6

A additive solution was prepared from the following ingredients:

| Ingredients | Parts by weight |
|---|---|
| N-Vinylpyrrolidone | 72 |
| Acrylamide | 23 |
| Thiourea | 10 |
| Hydrogen chloride | 1 |

The above ingredients were reacted and treated as described generally in Example 1 to obtain 250 parts the additive (solution).

Example 7

A additive solution was prepared from the following ingredients:

| Ingredients | Parts by weight |
|---|---|
| Styrenesulfonic acid | 35 |
| m-Phenylenediamine | 5 |
| N-Methylpyrrolidone | 60 |
| Diethylene glycol | 40 |

The above ingredients were reacted at a temperature of 80 to 90°C for 8 hours and treated as described generally in Example 1 to obtain 250 parts the additive (solution).

Example 8

A additive solution was prepared from the following ingredients:

| Ingredients | Parts by weight |
|---|---|
| 4-Vinylpyrrole | 70 |
| o-Tolidine | 8 |
| Ethylene glycol | 60 |
| Phosphoric acid | 1 |

The above ingredients were reacted and treated as described generally in Example 1 to obtain 250 parts the additive (solution).

Example 9

A additive solution was prepared from the following ingredients:

| Ingredients | Parts by weight |
|---|---|
| 4-Vinylpyridine | 50 |
| 2-Hydroxyethyl acrylate | 50 |
| Propylene glycol | 30 |
| Urea | 10 |
| Sulfuric acid | 1 |

The above ingredients were reacted at a temperature of 110 to 120°C for 10 hours and treated as described generally in Example 1 to obtain 250 parts the additive (solution).

Example 10

An additive solution was prepared from the following ingredients:

| Ingredients | Parts by weight |
|---|---|
| 4-Vinylpyrrolidone | 72 |
| m-Phenylenediamine | 10 |
| N-Methylpyrrolidone | 50 |
| Hydrogen chloride | 1 |

The above ingredients were reacted at a temperature of 60/70°C for 5 hours as described generally in Example 1. Then 117 parts of glycerol was added to the reaction mixture and held at a temperature of 90 to 100°C to obtain 250 parts the additive (solution).

Example 11

A additive solution was prepared from the following ingredients:

| Ingredients | Parts by weight |
|---|---|
| N-Vinylmonoethyleneurea | 45 |
| 2-Hydroxyethyl methacrylate | 40 |
| Melamine | 10 |
| Methyl cellosolve | 50 |
| Hydrogen chloride | 1 |

The above ingredients were reacted and treated as described generally in Example 1 to obtain 250 parts the additive (solution).

Example 12

A additive solution was prepared from the following ingredients:

| Ingredients | Parts by weight |
|---|---|
| 4-Vinylpyrrole | 70 |
| Diphenylguanidine | 10 |
| Ethanol | 64 |
| p-Toluenesulfonic acid | 2 |

The above ingredients were reacted at a temperature of 65 to 70°C for 8 hours as described generally in Example 1. Ethanol was added to the reaction mixture to obtain 250 parts the additive (solution).

Example 13

A additive solution was prepared from the following ingredients:

| Ingredients | Parts by weight |
|---|---|
| N-Vinylpyrrolidone | 68 |
| Methylimidazole | 10 |
| 2-Pyrrolidone | 64 |
| Ethylene carbonate | 50 |
| Hydrogen chloride | 1 |

The above ingredients were reacted and treated as described generally in Example 1 to obtain 250 parts the additive (solution).

Example 14

A additive solution was prepared from the following ingredients:

| Ingredients | Parts by weight |
|---|---|
| 2-Hydroxylethyl acrylate | 75 |
| p-Chloroaniline | 10 |
| N-Methylpyrrolidone | 50 |
| Hydrogen chloride | 1 |

The above ingredients were reacted and treated as described generally in Example 1 to obtain 250 parts the additive (solution).

Preparation of a felt tip pen ink

Example I

10 parts of propylene glycol, 5 parts of ethylene glycol and distilled water were added to the water-soluble dye and the additive solution shown in Table 1 to 100 parts of a mixture. The mixture was heated and dissolved and then filtrated to obtain a felt tip pen ink. The stability of the ink was tested, and also the water-resistance of a written trace was tested with a felt tip pen equipped with the ink in a felt tip pen container. The result is shown in Table 1.

Example II to IV

A felt tip pen ink was prepared and tested as described in Example I except that the water-soluble dye and the additive shown in Table 1 were used. The result is shown in Table 1.

Comparative Example 1

A felt tip pen ink was prepared and tested as described in Example I except that the additive which was prepared from N-methylpyrrolidone instead of 4-vinylpyrrole of Example 2 was used. The result is shown in Table 1.

Comparative Example II

A felt tip pen ink was prepared and tested as described in Example I except that the additive prepared from diethylene glycol instead of styrenesulfonic acid of Example 7 was used. The result is shown in Table 1.

Comparative Example III

A felt tip pen ink was prepared and tested as described in Example I except that the additive prepared from N-methylpyrrolidone instead of 4-vinylpyridine of Example 1 was used. The result is shown in Table 1.

Comparative Example IV

A felt tip pen ink was prepared and tested as described in Example I except that the additive prepared from N-methylpyrrolidone instead of 4-vinylpyrrole was used. The result is shown in Table 1.

Preparation of a jet printing ink

Example V

10 parts of 2-pyrrolidone, 1 part of phenol and distilled water were added to the water-soluble dye and the additive solution shown in Table 1 to obtain 100 parts of a mixture. The mixture was heated and dissolved at a temperature of 60 to 70°C and filtrated with a membrane filter having a pore size of 0.8 μ to obtain a jet printing ink. The stability of the ink and the water-resistance of written trace were tested as described generally in Example I. The result is shown in Table 1.

Example VI to VII

A jet printing ink was prepared and tested as described in Example V except that the water-soluble dye and the additive shown in Table 1 were used. The result is shown in Table 1.

Comparative Example V

A jet printing ink was prepared and tested as described in Example V with the exception that the additive prepared from diethylene glycol instead of 2-hydroxyethyl methacrylate of Example 3 was used. The result is shown in Table 1.

Comparative Example VI

A jet printing ink was prepared and tested as described in Example V with the exception that the additive prepared from N-methylpyrrolidone instead of N-vinylmonoethyleneurea of Example 5 was used. The result is shown in Table 1.

Comparative Example VII

A jet printing ink was prepared and tested as described in Example V with the exception that the additive prepared from diethylene glycol instead of 2-hydroxyethyl acrylate of Example 14 was used. The result is shown in Table 1.

A preparation of a fountain pen ink

Example VIII

To the water-soluble dye and the additive solution shown in Table 1 were added 5 parts of diethylene glycol, 1 part of dioxine and distilled water to obtain 100 parts of a mixture. The mixture was heated and dissolved and filtrated to obtain a fountain pen ink. The stability of the ink and the water-resistance of written trace were tested as described generally in Table 1. The result is shown in Table 1.

Example IX to X

A fountain pen ink was prepared and tested as described in Example VIII except that the water-soluble dye and the additive shown in Table 1 were used. The result is shown in Table 1.

Comparative Example VIII

A fountain pen ink was prepared and tested as described in Example VIII except that the additive prepared from N-methylpyrrolidone instead of 4-vinylpyrrolidone of Example 4 was used. The result is shown in Table 1.

Comparative Example IX

A fountain pen ink was prepared and tested as described in Example VIII except that the additive prepared from N-methylpyrrolidone instead of N-vinylpyrrolidone of Example 13 was used. The result is shown in Table 1.

Comparative Example X

A fountain pen ink was prepared and tested as described in Example IX except that the additive prepared from N-methylpyrrolidone and diethylene glycol instead of 4-vinylpyridine and 2-hydroxyethyl acrylate of Example 9 was used. The result is shown in Table 1.

A preparation of a ball point pen ink
Example XI

10 parts of ethylene glycol, 10 parts of diethylene glycol, 1 part of phenol and distilled water were added to the water-soluble dye and the additive solution shown in Table 1 to obtain 100 parts of a mixture. The mixture was heated and dissolved and filtrated to obtain a ball point pen ink. The stability of the ink and the water-resistance of written trace were tested as decribed generally in Example I. The result is shown in Table 1.

Example XII and XIII

A ball point pen ink was prepared and tested as described in Example XI except that the water-soluble dye and the additive shown in Table 1 were used. The result is shown in Table 1.

Comparative Example XI

A ball point pen ink was prepared and tested as described in Example XI except that the additive prepared from N-methylpyrrolidone instead of 4-vinylpyrrole of Example 2 was used. The result is shown in Table 1.

Comparative Example XII

A ball point pen ink was prepared and tested as described in Example XI except that the additive which was prepared from N-methylpyrrolidone instead of 4-vinylpyrrolidone of Example 4 was used. The result is shown in Table 1.

Comparative Example XIII

A ball point pen ink was prepared and tested as described in Example XI except that the additive which was prepared from N-methylpyrrolidone and diethylene glycol instead of 4-vinylpyridine and 2-hydroxyethyl acrylate of Example 9 was used. The result is shown in Table 1.

A preparation for a stamp pad ink
Example XIV

40 parts of glycerol, 2 parts of gum arabic and distilled water were added to the water-soluble dye and the additive solution shown in Table 1 to obtain 100 parts of a mixture. The mixture was heated and dissolved and then filtrated to obtain a stamp pad ink. The stability of the ink and the water-resistance of the stamped trace were tested as described generally in Exmample I. The result is shown in Table 1.

Example XV and XVI

A stamp pad ink was prepared and tested as described in Example XIV except that the water-soluble dye and the additive shown in Table 1 were used. The result is shown in Table 1.

Comparative Example XIV

A stamp pad ink was prepared and tested as described in Example XIV except that the additive prepared from N-methylpyrrolidone instead of 4-vinylpyrrolidone of Example 10 was used. The result is shown in Table 1.

Comparative Example XV

A stamp pad ink was prepared and tested as described in Example XIV except that the additive prepared from N-methylpyrrolidone instead of 4-vinylpyrrolidone of Example 6 was used. The result is shown in Table 1.

Comparative Example XVI

A stamp pad ink was prepared and tested as described in Example XIV except that the additive prepared from diethylene glycol instead of 2-hydroxyethyl acrylate of Example 14 was used. The result is shown in Table 1.

Table 1

| Use | Example/ Comparative Example | Water-soluble dye | | Additive (solution) | | Water-resistance of written trace | | Solubility | | Stability to heat | | pH stability | | Viscosity charge | | Filtration property | |
|---|---|---|---|---|---|---|---|---|---|---|---|---|---|---|---|---|---|
| | | C.I. name | Parts | Example of additive | Parts | Example | Comparative Exam. | Example | Comparative Exam. | Example | Comparative Exam. | Example | Comparative Exam. | Example | Comparative Exam. | Example | Comparative Exam. |
| Ink for | I | Acid Black 52 | 10 | 2 | 20 | 2 | 0 | ◎ | ○ | ○ | △ | ◎ | △ | ○ | ○ | ○ | ○ |
| felt tip | II | Acid Red 73 | 73 | 7 | 25 | 4 | 1 | ◎ | △ | ◎ | △ | ◎ | × | ○ | △ | ◎ | × |
| pen | III | Acid Blue 90 | 5 | 1 | 25 | 5 | 2 | ◎ | △ | ◎ | △ | ◎ | △ | ○ | ○ | ○ | △ |
| | IV | Basic Violet 1 | 3 | 8 | 20 | 4 | 2 | ◎ | ◎ | ◎ | ○ | ◎ | ○ | ○ | ○ | ○ | △ |
| Ink for | V | Direct Yellow 44 | 3 | 3 | 15 | 3 | 0 | ◎ | ○ | ◎ | ○ | ◎ | △ | ○ | ○ | ◎ | ○ |
| jet | VI | Acid Red Red 92 | 3 | 5 | 20 | 4 | 0 | ◎ | ◎ | ○ | ○ | ◎ | △ | ○ | ○ | ◎ | △ |
| print | VII | Dilect Blue 87 | 4 | 14 | 20 | 3 | 0 | ◎ | ○ | ○ | ○ | ◎ | ○ | ○ | ○ | ◎ | △ |
| Ink for | VIII | Dilect Black 19 | 3 | 4 | 5 | 5 | 2 | ◎ | ◎ | ◎ | △ | ◎ | × | ○ | △ | ◎ | △ |
| fountain | IX | Acid Blue 22 | 3 | 13 | 10 | 2 | 0 | ◎ | ◎ | ◎ | ○ | ◎ | △ | ○ | ○ | ◎ | ○ |
| pen | X | Acid Red 87 | 3 | 9 | 8 | 4 | 0 | ◎ | ◎ | ◎ | ◎ | ◎ | △ | ○ | ○ | ◎ | ◎ |
| Ink for | XI | Dilect Black 154 | 8 | 2 | 15 | 5 | 2 | ◎ | ○ | ◎ | ○ | ◎ | × | ○ | ○ | ◎ | △ |
| ball | XII | Acid Blue 15 | 5 | 4 | 15 | 4 | 1 | ◎ | △ | ◎ | △ | ◎ | × | ○ | ○ | ◎ | × |
| point pen | XIII | Acid Red 87 | 7 | 9 | 20 | 4 | 1 | ◎ | ◎ | ◎ | ◎ | ◎ | △ | ○ | ○ | ◎ | ◎ |
| Ink for | XIV | Acid Black 2 | 10 | 10 | 30 | 2 | 0 | ◎ | ○ | ○ | △ | ◎ | △ | ○ | △ | ◎ | △ |
| stamp | XV | Acid Red 18 | 8 | 6 | 30 | 2 | 0 | ◎ | ◎ | ◎ | ◎ | ◎ | △ | ○ | ○ | ◎ | ◎ |
| pad | XVI | Acid Blue 9 | 6 | 14 | 30 | 2 | 0 | ◎ | ◎ | ◎ | ◎ | ◎ | △ | ○ | ○ | ◎ | ◎ |

Water-resistance:

The trace written or transferred on a writing paper A (JIS P—3201) was dipped in distilled water for one minute after 30 minutes from writing down, and pulled up and dried up to evaluate the written trace.

*Evaluation:*

5: The written trace remained in an amount of 100 to 90%.
4: The written trace remained in an amount of 90 to 70%.
3: The written trace remained in an amount of 70 to 50%.
2: The written trace remained in an amount of 50 to 30%.
1: The written trace remained in an amount of 30 to 10%.
0: The written trace remained in an amount of 10 to 0%.

Solubility:

At the point of preparing an ink, a condition of solution is observed.

Stability to heat:

Stability when an ink is left to stand for 2 months at 50°C.

pH stability:

Acetic acid (or ammonia) is added to an ink composition.

Viscosity change:

The ink composition is left to stand for 3 months at room temperature.

Filtration property:

The ink composition is filtrated with a membrane filter having the pore size of 1μ (0.8μ in case of a jet printing ink).

Evaluation in Table 1:

◎: excellent
○: good
△: fairly good
×: bad

A peparation of an ink for a marker

Examples XVII to XIX

An ink for a marker was prepared from the following ingredients:

| Ingredients | arts by weight |
|---|---|
| A spirit dye | 5 to 20 |
| The additive (solution) prepared in Examples | 30 to 40 |
| Halon® 110H [1] | 10 |
| Methyl cellosolve | add to 100 |

[1] A ketone resin available from Honshu Chemical Co., Ltd.

The above ingredients were treated as described generally in preparation of a felt tip pen ink to obtain an ink for a marker. The inbk was charged in the container of the marker to evaluate the water-resistance of the written trace and the adhesion to a glass surface. The result is shown in Table 2.

Comparative Example XVIII to XIX

An ink for a marker was prepared as described generally in Example XVII to XIX except that methyl cellosolve is used instead of the additive (solution) prepared in the Examples.

Ingredients of Examples XVII to XTX are as folllow:

Example XVII

| Ingredients | Parts by weight |
|---|---|
| Valifast® Black #3820 [2] | 15 |
| The additive (solution) of Example 12 | 40 |

[2] C.I. Solvent Black 27 available from Orient Chemical Industries, Ltd.

Example XVIII

| Ingredients | Parts by weight |
|---|---|
| Valifast® Red #1308 [3] | 7 |
| The additive (solution) of Example 12 | 30 |

[3] C.I. Basic Red 1 available from Orient Chemical Industries, Ltd.

Example XIX

| Ingredients | Parts by weight |
|---|---|
| Valifast® Blue #1603 [4] | 5 |
| The additive (solution) of Example 12 | 40 |

[4] C.I. Basic Blue 7 available from Orient Chemical Industries, Ltd.

Table 2

| Example and Comparative Example No. | Water-resistance | | Adhesion | |
|---|---|---|---|---|
| | Example | Comparative Example | Example | Comparative Example |
| XVII | ◎ | ○ | ◎ | ○ |
| XVIII | ◎ | × | ◎ | △ |
| XIX | ○ | × | ◎ | ○ |

Adhesion: A written trace on a glass surface is dried up to conduct a peel test with an adhesive cellophane tape.

The following examples illustrate the preparation of a coated paper

Example XX to XXII

The additive solution prepared in the Examples was coated on a writing paper A of JIS P—3201. The coated paper was dried.

The water-resistance test was conducted with the coated paper and a felt tip pen charged with the ink prepared in Comparative Example II. The result is shown in Table 3.

Table 3

| Example | Additive (solution) | Water-resistance |
|---|---|---|
| XX | Example 2 | 3 |
| XXI | " 6 | 4 |
| XXII | " 11 | 3 |
| No additive | - | 1 |

The following examples illustrate the preparation of concentrated dyestuffs solutions and their use

Example XXIII

(concentrated black dyestuff solution)

The dye concentrated black dyestuff solution was prepared from the following ingredients:

| Ingredients | Parts by weight |
|---|---|
| C.I. Acid Black 52 | 20 |
| The additive (solution) of Example 2 | 40 |
| Distilled water | 40 |

The above ingredients were heated at a temperature of 60 to 70°C and filtrated to obtain a concentrated black dyestuff solution. The concentrated solution has good stability at 5°C and 60°C for three months.

The concentrated solution was diluted with distilled water to two times of its original volume to obtain the felt tip pen ink of Example I.

Example XXIV

(concentrated red dyestuff solution)

The concentrated red dyestuff solution was prepared from the following ingredients:

| Ingredients | Parts by weight |
|---|---|
| C.I. Acid Red 90 | 15 |
| The additive (solution) of Example 7 | 75 |
| Distilled water | 10 |

The above ingredients were treated as described generally in Example XXIII to obtain a concentrated red dyestuff solution. The concentrated solution has a clear hue and good stability for a long time.

The concentrated solution was diluted with distilled water to three times of its original volume to obtain the felt tip pen ink of Example II.

Example XXV

(concentrated blue dyestuff solution)

The concentrated blue dyestuff solution was prepared from the following ingredients:

| Ingredients | Parts by weight |
|---|---|
| C.I. Acid Blue 90 | 15 |
| The additive (solution) of Example 1 | 75 |
| Distilled water | 10 |

The above ingredients were treated as described generally in Example XXIII to obtain a concentrated blue dyestuff solution. The concentrated solution has a clear hue and good stability for a long time.

The concentrated solution was suitable as a coloring composition.

**Claims**

1. Reaction product obtainable by reacting

(a) a vinyl compound soluble in water or in a water soluble organic solvent, with

(b) an active hydrogen-containing compound which contains at least two groups having an active hydrogen respectively, at least one group of which is an amino group or imino group, or an active

hydrogen-containing compound which contains a halogen atom and an amino or imino group,

(c) optionally in the presence of a catalyst, and

(d) optionally in the presence of a solvent.

2. The reaction product of claim 1 in which the molar ratio of the vinyl compound to the active hydrogen-containing compound is 100:5 to 30.

3. The use of the reaction product according to claims 1 and 2 as additive conferring water resistance on ink compositions and colouring compositions and on paper.

**Patentansprüche**

1. Reaktionsprodukt erhältlich durch Umsetzung

(a) einer in Wasser oder in einem wasserlöslichen organischen Lösungsmittel löslichen Vinylverbindung mit

(b) einer aktiven Wasserstoff enthaltenden Verbindung, die mindestens zwei jeweils aktiven Wasserstoff tragende Gruppen enthält, von denen mindestens eine Gruppe eine Aminogruppe oder Iminogruppe ist, oder einer aktiven Wasserstoff enthaltenden Verbindung, die ein Halogenatom und eine Amino- oder Iminogruppe enthält,

(c) gegebenenfalls in Gegenwart eines Katalysators, und

(d) gegebenenfalls in Gegenwart eines Lösungsmittels.

2. Reaktionsprodukt nach Anspruch 1, in dem das molare Verhältnis der Vinylverbindung zu der aktiven Wasserstoff enthaltenden Verbindung 100 zu 50 bis 30 beträgt.

3. Verwenden des Reaktionsprodukts nach den Ansprüchen 1 und 2 als Additiv, das Tintenzusammensetzung, farbgebenden Zusammensetzungen und Papier Wasserbeständigkeit verleiht.

**Revendications**

1. Produite de réaction susceptible d'être obtenu par réaction

(a) d'un composé vinylique soluble dans l'eau ou dans un solvant organique soluble dans l'eau, avec

(b) un composé contenant de l'hydrogène actif, qui comprend au moins deaux groupes ayant chacun un hydrogène acif, dont l'un au moins est un groupe amino ou un groupe imino, ou un composé contenant de l'hydrogène actif, qui comprend un atome d'halogène et un groupe amino ou imino,

(c) cas échéant, en présence d'un catalyseur, et

(d) cas échéant, en présence d'un solvant.

2. Produit de réaction selon la revendication 1, dans lequel le rapport molaire du composé vinylique au composé contenant de l'hydrogène actif est de 100:5 à 30.

3. Utilisation du produit de réaction selon les revendications 1 et 2 comme additif conférant la résistance à l'eau à des compositions d'encre et à des compositions colorantes et au papier.